(19) Europäisches Patentamt / European Patent Office / Office européen des brevets

(11) **EP 4 434 765 A1**

(12) **EUROPEAN PATENT APPLICATION**

(43) Date of publication:
**25.09.2024  Bulletin 2024/39**

(21) Application number: **23164083.0**

(22) Date of filing: **24.03.2023**

(51) International Patent Classification (IPC):
**B60C 1/00** *(2006.01)*    **C08K 3/04** *(2006.01)*

(52) Cooperative Patent Classification (CPC):
(C-Sets available)
**B60C 1/00; B60C 1/0025; B60C 1/0041;
C08K 3/04; C08L 21/00;** C08L 2207/24    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokian Renkaat Oyj
37101 Nokia (FI)**

(72) Inventors:
• **Ojala, Anne
37101 Nokia (FI)**
• **Kemppainen, Noora
37101 Nokia (FI)**

(74) Representative: **Berggren Oy
P.O. Box 16
Eteläinen Rautatiekatu 10A
00101 Helsinki (FI)**

(54)   **A PNEUMATIC TYRE COMPRISING RECOVERED FILLER**

(57)   The invention relates to a pneumatic tyre comprising a metal component, a textile component and a cured rubber component, wherein the cured rubber component contains carbon black and recovered filler material, which is obtained from pyrolyzed tyre rubber comprising lignin-based filler material. Upon pyrolysis, the presence of lignin-based filler material in a tyre rubber may be used for adjusting the morphology and overall bulk density of the recovered filler material. Use of recovered filler material in a rubber component of a pneumatic tyre reduces the use of virgin feedstock materials.

Fig. 1

EP 4 434 765 A1

(52) Cooperative Patent Classification (CPC): (Cont.)

C-Sets
**C08K 3/04, C08K 3/04;**
**C08L 21/00, C08L 19/003;**
**C08L 21/00, C08L 19/003, C08K 3/04**

**Description**

**Field of invention**

The invention relates to a pneumatic tyre comprising a cured rubber component, which contains carbon black and recovered filler material, wherein the recovered filler material is from pyrolyzed tyre rubber comprising lignin-based filler material.

**Background**

Environmental awareness has led the automobile industry to develop alternative solutions for person and cargo transportation. Novel motor vehicles differ from their predecessors in many aspects. For example, in an electric vehicle, the internal combustion engine has been replaced by an electric motor and high voltage batteries. Such alterations not only change the power source of the vehicle but also have an impact to the overall weight and vehicle performance, whereby tyres used in these novel motor vehicles need to be adapted, as well. Tyres for electric vehicles carry a heavier load and need to withstand high instant torque. An increased load should not increase the weight of the tyre, however. Hence, environmental awareness and innovations in the automobile industry drive a development in the tyre industry. There is a need to produce tyres that better suit the novel motor vehicles in a sustainable manner.

A cured pneumatic tyre typically comprises metal, textile and rubber components. The rubber components are based on compositions comprising polymer and reinforcing filler, such as carbon black and/or silica, which have been cured or vulcanized together. Softeners, antidegradants and curatives are typically mixed as additives to the composition prior to curing. The use of raw materials with defined characteristics is of importance, as it ensures that desired and optimal properties may be obtained for each type of rubber component to be prepared. A rubber component of a pneumatic tyre may experience more than 40 million loading-unloading cycles during its lifetime, whereby a tyre rubber needs to meet very demanding quality criteria, including endurance and low rolling resistance.

Carbon black, abbreviated as CB, in this context, refers to a reinforcing filler material which has been produced from fossil hydrocarbon feedstock, such as oil, for example in a furnace by means of a thermal-oxidative decomposition process. Carbon black obtained from fossil hydrocarbon feedstock is denoted as virgin carbon black. Virgin carbon black may also be denoted as non-recovered carbon black. The morphology of the virgin carbon black may be controlled by adjusting the conditions of the incomplete combustion under oxidative conditions. Carbon black is typically characterized based on specific surface area and structure. Standardized test methods, including chemical analyses, are used for classification purposes, which define the suitability of the material for various applications. ASTM D1765-14 is an example of a standard widely used for classification of rubber-grade carbon blacks. The primary particle size, aggregate formation and surface properties are key parameters, which indicate the reinforcing potential and suitability of the material for tyre rubber applications. Fine carbon blacks having a primary particle size in the range of 1-30 nm are typically denoted as hard blacks and comprise high reinforcing potential. Carbon blacks having a primary particle size in the range of 31-200 nm are typically denoted as soft blacks and comprise semi-reinforcing potential. Hard blacks are typically used in tyre rubber components which need to withstand significant levels of mechanical stress, such as tire treads. Soft blacks are typically used in non-tread area components, such as side wall and carcass components.

Pyrolysis processes operated in a reductive environment, typically at a temperature in the range of 400 to 700°C, have been proposed as a means to recycle tyre rubbers from a pneumatic tyre, after non-rubber components, such as metal and textile components of the pneumatic tyre, have been separated from the pneumatic tyre. The pyrolysis of tyre rubbers involves multiple stages, which produce a volatile fraction and a non-volatile fraction. The volatile fraction refers to a gaseous fraction and typically contains condensable gaseous compounds, such as hydrogen and $C_1$ to $C_4$ hydrocarbons. The non-volatile fraction is a solid fraction which remains after separation of the volatile fraction. The non-volatile fraction from the pyrolysis is denoted as recovered carbon black or rCB. The non-volatile fraction from the pyrolysis may also be denoted as pyrolytic carbon black or PCB. The presence of polymers and additives from the tyre rubbers during the pyrolysis leads to the rCB to contain a considerable amount of impurities, such as inorganic minerals and sulphur, which distinguishes it from virgin carbon black. While the composition of rCB may vary with respect to the used feedstock, in general it is characterized by a relatively low porosity and a relatively low BET surface area, typically in the range of 50 to 80 $m^2/g$.

Due to its origins, recovered carbon black typically is multimodal in nature and demonstrates a wide particle size distribution, as well as a higher ash content than virgin carbon black. Hence, rCB no longer has the same morphology as virgin carbon black and exhibits a structure that varies widely between low and medium, when considered in terms of reinforcing potential. The rCB typically demonstrates reduced surface activity, poor dispersion capability and, in particular, significantly less reinforcing potential than commercially available virgin carbon black grades having the same primary particle size and surface area. While the colloidal properties of rCB typically suggest a reinforcing potential which compares to virgin carbon black between the N300 and N500 series, the in-rubber performance data indicates a resemblance closer to the N700 series.

Attempts have been made to upgrade the quality of recovered carbon black. Further modification of the recovered filler material may be used to adjust its characteristics, but this comes with an extra cost. An extra heating at a higher temperature in the same process, such as in the range of 600 to 900°C, has been proposed for producing rCB. While such post-pyrolysis of the rCB may be used to increase the surface area and reduce the amount of carbonaceous deposits on the surface of the material, the extra heating promotes agglomeration of the formed primary particles, which agglomerates are difficult to break. Physical activation by means of steam has also been proposed for improving the BET surface area of the rCB. This, however, has been shown to lead to formation of mesoporous activated carbon with an extremely high BET surface area, typically over 700 $m^2$/g, which is not suitable for rubber applications. While intending to upgrade and improve the overall sustainability of the rCB, the reported solutions hence strongly rely on further processing steps and post-treatment of the produced rCB.

Therefore, use of recovered carbon black as a reinforcing filler in a tyre rubber is challenging, as the pyrolytic material produced is often of insufficient quality for this purpose, when reviewed in terms of surface area, pore size, pore size distribution and pore volume. The usability of recovered carbon black as a reinforcing filler in tyre rubbers, hence, is limited.

## Summary

The suitability of recovered carbon black obtained from pyrolysis of conventional tyre rubbers for use as a reinforcing filler in a tyre rubber, as disclosed above, may be improved by pyrolyzing conventional rubber components of pneumatic tyres together with rubber components of pneumatic tyres which comprise lignin-based filler material. Reference is made to publication EP3243877, which discloses a pneumatic tyre with a cured rubber component comprising lignin that has been treated by hydrothermal carbonization. Recent experimental studies have demonstrated that a tyre rubber comprising lignin-based filler material may be used to adjust the outcome of the pyrolysis. The presence of lignin-based filler material in the pyrolysis has been observed to alter the structure of the non-volatile fraction resulting from the pyrolysis such that the recovered filler material has properties which differ from rCB obtained from conventional tyre rubbers. Conventional tyre rubbers, in this context, refer to tyre rubbers obtained from pneumatic tyres which contain carbon black produced from fossil hydrocarbon feedstock, but do not contain lignin-based filler material. Upon pyrolysis, the presence of lignin-based filler material in a tyre rubber may be used for adjusting the morphology and increasing specific surface area of the resulting non-volatile fraction of the pyrolysis, that is, the recovered filler material. Use of recovered filler material in a rubber component of a pneumatic tyre, in turn, reduces the use of virgin feedstock materials and therefore improves sustainability.

Lignin is renewable and environmentally sustainable natural polymer, which contains relatively high amounts of functional groups, such as carbonyl groups, aliphatic hydroxyl groups and phenolic hydroxyl groups. Wood-based lignin is available as a by-product of the pulp and paper industry. Kraft lignin is an example of commercially available wood-based lignin, which is obtained from a Kraft process. Kraft process accounts for majority of the total lignin production globally. Kraft process refers to a pulping method for converting wood to pulp, wherein white liquor that comprises water, sodium hydroxide, and sodium sulfide is used to extract lignin, hemicellulose, and cellulose.

The functional groups of lignin are preserved to a relatively high extent even in thermochemical processes, where it is partially degraded. Hydrothermal carbonization treatment of lignin, in particular, has been demonstrated to produce lignin derivatives that are beneficial as fillers in tyre rubbers and able to improve the performance of a pneumatic tyre. A hydrothermal carbonization of lignin thus refers to method wherein lignin, such as Kraft lignin, in aqueous suspension is subjected to partial decomposition by means of heat and elevated pressure. Lignin that has been treated by hydrothermal carbonization is hereafter referred to also as HTC lignin. Hydrothermal carbonization of lignin can be carried out in a reactor, such as in a batch reactor suitable for chemical reactions. Batch process, such as a single batch process, provides an advantageous way to control the process conditions of a hydrothermal carbonization treatment. The internal pressure of the reactor is selected such that the water inside the reactor is maintained in a liquid state during the hydrothermal carbonization. Typically, the internal pressure of the reactor during hydrothermal carbonization reaction is in the range of 10 to 40 bar. Typically, the temperature during hydrothermal carbonization reaction is less 300°C, such as in the range of 150 to 250°C, the temperature referring to the temperature of the aqueous suspension inside the reactor vessel. Lignin is highly soluble in alkaline conditions and the particle size of HTC lignin is dependent of the pH chosen for the hydrothermal carbonization treatment. Reduction of the hydrogen ion ($H^+$) concentration of the aqueous suspension which contains lignin, prior and/or during the hydrothermal carbonization, reduces the particle size of the formed HTC lignin. Increasing of the hydrogen ion ($H^+$) concentration of the aqueous suspension which contains lignin, prior and/or during the hydrothermal carbonization, increases the particle size of the formed HTC lignin. Conventional pH modifying agents, such as inorganic acids and bases, may be used for the adjustment of the pH of the aqueous suspension prior and/or during the hydrothermal carbonization. The particle size of HTC lignin refers to the average particle size of the material, after the hydrothermal carbonization treatment. The average particle size of HTC lignin can be determined by the same means as the average particle size of carbon black, for example by measuring the specific surface area of the material. Typically, HTC lignin which is used for rubber based components of a pneumatic tyre has a specific surface area of less than 150 m$^2$/g, such as in the range of 10 to 150 m$^2$/g, when determined according to standard ASTM D6556-10.

The presence of lignin-based filler material, such as lignin, in particular lignin that has been treated by hydrothermal carbonization, in the tyre rubber, has an effect to the type of porosity formed into the recovered filler material upon pyrolysis. The pyrolysis of conventional tyre rubbers is known to produce mesoporous material. However, the presence of lignin-based filler material, in particular lignin that has been treated by hydrothermal carbonization, in pyrolyzed tyre rubbers, has been observed to result into the development of very narrow diameter porosity having a pore diameter that is less than 2 nanometers, denoted as microporosity. The microporosity possessed by a recovered filler material may be determined, for instance, by means of nitrogen sorption isotherms from a sample, using a surface area and porosity analyzer. The presence of lignin-based filler material in the pyrolysis thus alters the outcome of the pyrolysis such that recovered filler material having enhanced structure is obtainable. The pyrolysis of tyre rubbers comprising both carbon black and lignin-based filler material, preferably lignin that has been treated by hydrothermal carbonization, has been observed to be particularly advantageous for modifying the level of total surface area of the recovered filler material, while increasing the microporosity of the recovered filler material. The use of tyre rubber comprising carbon black and lignin-based filler material, preferably lignin that has been treated by hydrothermal carbonization, reduces the need for post-modification of the recovered filler material, such as steam treatment or extra heating at a higher temperature. Preferably, prior to pyrolysis, tyre rubber from which recovered filler material is prepared, contains the lignin-based filler material at least 4 wt.%, preferably at least 7 wt.%, such as in the range of 4 to 18 wt.% of the total weight of the tyre rubber.

The pyrolysis of lignin-based materials produces higher amount of volatile substances than the pyrolysis of carbon black. The volatile content, as well as residual ash content, of pyrolyzed lignin-based materials is therefore also higher. The pyrolysis of semi-reinforcing N660 series carbon black at 500°C produces an ash content, which is in the range of 0.1 - 0.3 wt.%. The pyrolysis of lignin at 500°C, however, produces an ash content, which is in the range of 5-6 wt.%. Preferably, the pyrolysis of tyre rubber comprising lignin-based filler material is operated in a temperature range of 500 to 700°C. Most preferably, the non-volatile fraction consists of the solid fraction, which has been produced at a pyrolysis temperature of 600°C. An increase of the pyrolysis temperature generates more volatile matter, which in the case of lignin-based materials may be used for adjusting the development of microporosity to the recovered filler material.

Due to the higher ash content of the non-volatile fraction, a demineralization treatment is typically used for reducing the amount of ash and sulfur in the recovered filler material. For instance, a common acid treatment, wherein the non-volatile fraction is heated to a boiling point in 1M HCl solution, filtered, and the residue washed with distilled water until a filtrate having a neutral pH is obtained, may be used. Advantageously, an acid-base treatment wherein the non-volatile fraction is first stirred at 60°C for 1 h in 4M HCl solution, filtered, and the residue washed with distilled water and the procedure is repeated with 5M NaOH solution, is used. After alkaline treatment and washing with distilled water, the demineralized residue may be dried for further use. An acid-base demineralization treatment as disclosed above typically leads to a reduction in the range of 70 - 80 wt.% of the amount of ash and sulfur in the recovered filler material.

Experimental studies of tyre rubbers comprising lignin-based filler material demonstrate that pyrolysis in a temperature of 600 °C induces microporosity formation into the recovered filler material, determinable by means of multipoint nitrogen adsorption (ASTM D6556-19a) using the t-plot method, which can determine the surface area and pore volume of a sample. The multipoint nitrogen adsorption, denoted as NSA, is based on the B.E.T theory, which includes the total surface area $S_{BET}$, inclusive of micropores having a pore diameter that is less than 2 nanometers. Preferably, the recovered filler material has a t-plot micropore surface area in the range of 20 to 150 cm$^2$/g. The increase of microporosity in the structure has an effect of reducing the overall bulk density of the recovered filler material, without sacrificing the surface characteristics of the recovered filler material. This enables to produce recovered filler material having less weight. Such recovered filler material may advantageously be used as carbon black type filler material when preparing a tyre rubber for a pneumatic tyre.

Particularly preferred is a pyrolysis product of tyre rubber comprising carbon black and lignin that has been treated by hydrothermal carbonization. Such material has been demonstrated to produce two consecutive mass losses in a dynamic thermogravimetric analysis in a temperature range from 500 to 750°C, upon exposure to oxidative atmosphere. Upon switching the atmosphere from inert (N$_2$) to oxidative (synthetic air), two consecutive peaks are observable in the first derivative, wherein the first peak represents the differential mass change of lignin-based material due to oxidative reactions at a temperature less than 600°C and the second peak represents the differential mass change of carbon black based material due to oxidative reactions at a temperature higher than 600°C. A recovered filler material from such tyre rubber has been further demonstrated to have a higher total surface area than recovered filler material obtained from tyre rubber comprising only carbon black, while increasing the microporosity formation into the recovered filler material, determinable by means of multipoint nitrogen adsorption (ASTM D6556-19a) using the t-plot method. Preferably, the total surface area of the non-volatile fraction from pyrolyzed tyre rubber comprising lignin-based filler material is less than 200 m²/g, such as between 150 and 200 m²/g. The combination of increased microporosity and a total surface area of less than 200 m²/g in a recovered filler material is beneficial when manufacturing a tyre rubber for a pneumatic tyre, wherein sufficient reinforcing potential of the filler is required. The reuse of tyre rubber which contains lignin-based filler material as recovered filler material in the production of pneumatic tyres further increases the environmental sustainability.

Recovered filler material, which is non-volatile fraction from pyrolyzed tyre rubber comprising lignin-based filler material as disclosed above, may thus be used for improving the characteristics of a pneumatic tyre. Advantageously, the recovered filler material is non-volatile fraction from pyrolyzed tyre rubber comprising lignin. Most advantageously, the recovered filler material is non-volatile fraction from pyrolyzed tyre rubber comprising lignin that has been treated by hydrothermal carbonization. The combination of recovered filler material together with non-recovered carbon black may be used to reduce the density of the rubber composition, which enables to reduce the weight of the produced rubber component. This enables the manufacturing of a pneumatic tyre having less weight in a sustainable manner, which better meets the quality criteria of tyre rubbers for novel motor vehicles. This is particularly advantageous for non-tread area components, such as sidewall and/or carcass components, which, due to their location in the pneumatic tyre, are less susceptible for wear than the tread area components. Further, as the specific surface area of the recovered filler material does not directly translate into its in-rubber performance potential, the recovered filler material may further be mixed with non-recovered carbon black upon manufacturing tyre rubber. Preferably, the proportion of non-recovered carbon black to the recovered filler material in the cured rubber component is in the range of 40 to 60 wt.%, preferably in the range of 45 to 55 wt.%, most preferably in the range of 48 to 52 wt.%. Advantageously, the amount of recovered filler material in the cured rubber component is at least 7 wt.%, preferably at least 15 wt.%, most preferably at least 25 wt.% of the total weight of the cured rubber component of the pneumatic tyre. Advantageously, the amount of carbon black and recovered filler material in the cured rubber component, together, is at least 15 wt.%, preferably at least 20 wt.%, most preferably at least 30 wt.%, such as in the range of 15 to 49 wt.% of the total weight of the cured rubber component of the pneumatic tyre. When the non-recovered carbon black and the recovered filler material are used in substantially equal amounts, the in-rubber performance potential, especially the reinforcing potential, of the filler mixture of carbon black type fillers may be better adjusted. The tensile properties of rubber components produced from recovered filler material compare to tensile properties of rubber components produced from semi-reinforcing N660 carbon black. However, carbon black grades ranging from N300 to N700 series, typically used in non-tread area components, such as general carcass components, and having a specific surface area $S_{BET}$ in the range of 25 to 100 m²/g, preferably in the range of 27 to 70 m²/g (ASTM D6556-19a) may be used together with the recovered filler material. Advantageously, to match the tensile properties, N660 grade carbon black having a specific surface area $S_{BET}$ in the range of 30 to 40 m²/g (ASTM D6556-19a) may be used together with the recovered filler material, when preparing a tyre rubber for a pneumatic tyre.

Referring to the description above, according to a first aspect, there is provided a pneumatic tyre comprising a metal component, a textile component and a cured rubber component, wherein the cured rubber component contains

- carbon black, and
- recovered filler material

wherein

- the recovered filler material is non-volatile fraction from pyrolyzed tyre rubber comprising lignin-based filler material, the recovered filler material having a specific surface area which is less than 200 m²/g, the specific surface area referring to the total surface area ($S_{BET}$) based on multipoint nitrogen adsorption, determinable according to ASTM D6556-19a of carbon black type filler material.

According to a second aspect, there is provided a method for manufacturing a pneumatic tyre, the method comprising

- arranging one or more rubber components onto a building drum to form a tubular preform, wherein at least one rubber component contains carbon black and recovered filler material,
- expanding the tubular preform to form a preform of a pneumatic tyre,
- arranging a metal component and a textile component onto the preform of a tyre, and
- curing the preform of a pneumatic tyre, thereby bonding the components together by means of curing and thereby manufacturing a pneumatic tyre comprising a cured rubber component,

wherein

- the recovered filler material is non-volatile fraction from pyrolyzed tyre rubber comprising lignin-based filler material, the recovered filler material having a specific surface area which is less than 200 m²/g, the specific surface area referring to the total surface area ($S_{BET}$) based on multipoint nitrogen adsorption, determinable according to ASTM D6556-19a of carbon black type filler material.

According to a further aspect, there is provided a use of non-volatile fraction from pyrolyzed tyre rubber comprising lignin-based filler material, as disclosed above, as filler material in a rubber component of a pneumatic tyre. Preferably, the lignin-based filler material is lignin, most preferably lignin that has been treated by hydrothermal carbonization. Advantageously, the non-volatile fraction from pyrolyzed tyre rubber comprising lignin-based filler material is used in combination with non-recovered carbon black as filler material in a rubber component of a pneumatic tyre. The non-volatile fraction from pyrolyzed tyre rubber comprising lignin-based filler material may be used, for example, as a filler in a non-tread area component, such as a side wall or a carcass component of a pneumatic tyre.

The invention is further presented in the detailed description of the invention and in the independent and dependent claims.

## Summary of the Figures

Figure 1   illustrates, by way of an example, a method for manufacturing a pneumatic tyre for a vehicle, wherein at least one rubber component contains recovered filler material obtained from pyrolyzed tyre rubber comprising lignin-based filler material, such as lignin that has been treated by hydrothermal carbonization.

Figure 2   is a multivariable diagram of a TGA experiment of recovered filler material, which has been obtained by pyrolyzing tyre rubber that contained carbon black as filler.

Figure 3   is a multivariable diagram of a TGA experiment of recovered filler material, which has been obtained by pyrolyzing tyre rubber that contained kraft lignin as filler.

Figure 4   is a multivariable diagram of a TGA experiment of recovered filler material, which has been obtained by pyrolyzing tyre rubber that contained HTC lignin as filler.

Figure 5   is a multivariable diagram of a TGA experiment of recovered filler material, which has been obtained by pyrolyzing tyre rubber that contained both carbon black and HTC lignin as filler.

## Detailed description

*A method for manufacturing a pneumatic tyre comprising recovered filler material*

A vast majority of passenger car vehicles today use pneumatic tyres. A pneumatic tyre in this context refers to a radial tyre used on a motor driven vehicle. Typical examples of pneumatic tyres are passenger car, SUV-, VAN-, bus and/or truck tyres. Pneumatic tyres, referred to as heavy tyres, may also be used in mining, harbour and forestry applications. A key benefit of a pneumatic tyre is, when mounted on a rim and inflated, that it is capable of acting as a damper system to absorb impacts and surface irregularities under a wide variety of operating conditions. A pneumatic tyre typically comprises multiple components, such as rubber, textile and metal components, which have been assembled together and cured to meet the desired performance characteristics A pneumatic tyre of a passenger car can roll over 800 revolutions per mile and be in use up to 50000 miles. A tyre rubber thus requires exceptional characteristics, including endurance and low rolling resistance.

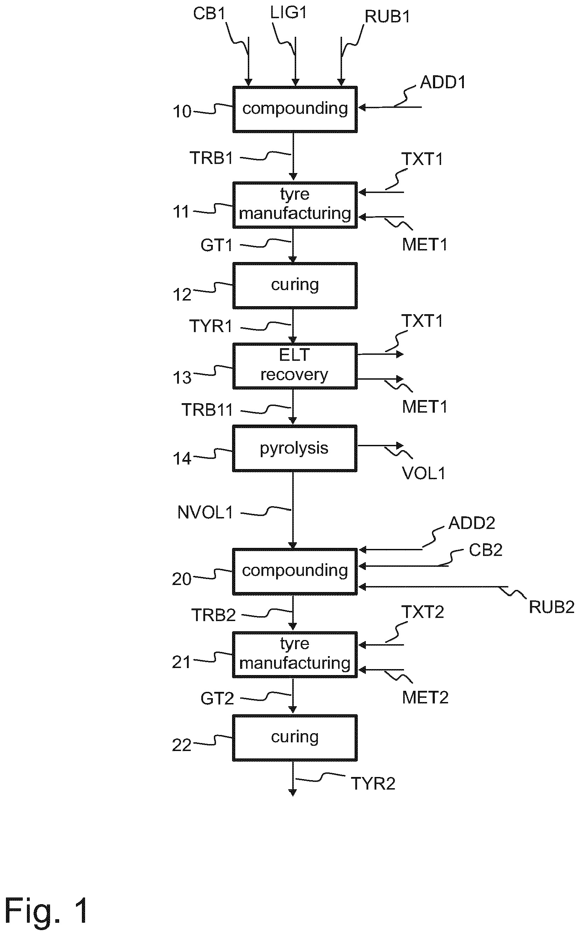

Reference is made to Figure 1, which illustrates a method for manufacturing a pneumatic tyre TYR2 for a vehicle, wherein at least one rubber component contains recovered filler material obtained from pyrolyzed tyre rubber comprising lignin-based filler material LIG1, such as lignin that has been treated by hydrothermal carbonization. In particular, Figure 1 illustrates that a method for manufacturing a pneumatic tyre TYR1 for a vehicle from rubber components TRB1 which have been prepared from virgin filler materials is distinguished from a method for manufacturing a pneumatic tyre TYR2 for a vehicle, wherein recovered filler material obtained from the pyrolysis 14 of used tyre rubber TRB11 is used for the preparation of rubber components TRB2.

A tyre rubber is typically prepared by a stepwise compounding 10 of elastomer RUB1 and reinforcing fillers CB1, LIG1 in a reactor or an internal mixer. Additives ADD1, such as curatives and protective agents, are used for optimizing the compounding and curing. A pneumatic tyre rubber component typically comprises elastomer RUB1, such as synthetic or natural rubber. Conventional reinforcing fillers CB1, are carbon black and/or silica. A lignin-based filler material LIG1, such as lignin that has been treated by hydrothermal carbonization, is economically sustainable material. Lignin that has been treated by hydrothermal carbonization may further be used as a functional filler, which is capable to improve the characteristics and performance of a pneumatic tyre TYR1. Softeners, such as resins or waxes, are typically used as additives ADD1 to improve tack of unvulcanised compounds. Antidegradants may be added to protect the tyre against deterioration caused by oxygen, ozone and heat. Curatives, such as sulfur accelerators and activators, are added upon vulcanization or curing for linking the polymer chains and to obtain optimal properties for the tyre rubber. The basics of tyre rubber preparation are well-known and disclosed, for example, by Andreas Limper in the "Mixing of Rubber Compounds" (2012, Hanser Publishers).

The tyre rubber is used in a method for manufacturing a pneumatic tyre, which comprises manufacturing a preform of a pneumatic tyre 11 and a subsequent curing of the pneumatic tyre 12. A preform of a pneumatic tyre is prepared by receiving a rubber component TRB1 and arranging it onto a building drum to form a tubular preform. When the tubular preform is expanded, a preform of a pneumatic tyre is obtained. Typically, one or more metal components MET1 and one or more textile components TXT1 are arranged onto the preform of a tyre. An assembled tyre comprising a metal component, a textile component and one or more rubber components, which have not yet been cured, is referred to as a green tyre GT1. In general, the pneumatic tyre TYR1 may comprise one or more metal and textile components for reinforcement purposes. Typically, the metal components, such as belts or bead wires, are made of resilient steel. The textile components, such as reinforcing textile layers, radial plies or nylon belts, are typically made of synthetic polymeric materials, such as polyethylene terephthalate or polyamide.

Curing 12, 22 is typically a vulcanization process, wherein the preform is heated in a temperature typically less than 200°C, such as in the range of 150 to 200°C. During the curing reaction, sulphur containing compounds present in the rubber components undergo cross-linking reactions. The formed cross-linked structure bonds the tyre components firmly together. The duration of the curing may vary, depending on the tyre type and size. A pneumatic tyre for a passanger car may be cured in less than an hour, such as within a few minutes, whereas a heavy tyre may be cured for hours.

The lignin-based filler material LIG1 is added into the rubber component upon compounding 10. When using lignin that has been treated by hydrothermal carbonization, hereafter denoted also as HTC lignin, it is preferably mixed stepwise with the elastomer at a temperature in the range of 130°C to 160°C. A the coupling agent, such as a bis-[3-(triethoxysilyl)-propyl]-tetrasulfide (TESPT), may be used together with the HTC lignin. A cured pneumatic tyre TYR1 may comprise one or more rubber components of a pneumatic tyre, which contain lignin-based filler material, such as HTC lignin. A rubber component of a pneumatic tyre may contain lignin-based filler material in an amount of equal to or less than 75 wt.%, such as in the range of 1 to 70 wt.%.

A used pneumatic tyre TYR1 which no longer can be retreaded or used, is referred to as an end-of-life tyre or ELT tyre. An ELT recovery 13 denotes a process where the metal components MET1 and textile components TXT1 are separated from the rubber components TRB11 of used pneumatic tyres. Thus recovered cured tyre rubber may be subjected to a pyrolysis 14 in order to recycle the cured tyre rubber. The pyrolysis 14 of tyre rubber comprising lignin-based filler material may be operated in a temperature range of 500 to 700°C. A pyrolysis 14 of tyre rubber comprising HTC lignin is advantageously operated in a temperature of 600°C, which has been observed to be useful for adjusting the porosity of the recovered filler material.

For the purpose of obtaining recovered filler material from pneumatic tyres TYR1 having enhanced structure by means of pyrolysis, the amount of lignin-based filler material in the rubber components is preferably at least 4 wt.%, more preferably at least 7 wt.%, such as in the range of 4 to 18 wt.% of the total weight of the tyre rubber. The efficiency of porosity formation is better with tyre rubber comprising higher amount of lignin-based filler material.

Pyrolysis is a widely used thermochemical process, which may be used for decomposing organic material at elevated temperatures. Generally, pyrolysis generates two fractions, a volatile fraction VOL1 and a non-volatile fraction NVOL1. The volatile fraction VOL1 is mostly generated from the pyrolysis of elastomers in the tyre rubber, and typically contains condensable compounds such as hydrogen, carbon monoxide, carbon dioxide and $C_1$ to $C_4$ hydrocarbons. The volatile fraction VOL1 may further contain non-condensable compounds, as well as char. The non-volatile fraction NVOL1 refers to a solid fraction, which mostly contains the organic and inorganic fillers of the tyre rubber. Depending of the composition of the tyre rubbers, the non-volatile fraction NVOL1 may comprise carbon black and silica, as well as inorganic residues, such as ZnO, used for optimizing the compounding and curing or their derivatives. When lignin-based fillers have been used in the preparation of the tyre rubber, residues or derivatives of theses may be present, as well. The non-volatile fraction NVOL1 from the pyrolysis, which is pyrolyzed tyre rubber comprising lignin-based filler material, is denoted as recovered filler material. The recovered filler material, after a demineralization treatment to reduce the ash and sulfur content of the recovered material, as disclosed above, may be used as a filler in compounding 20 with elastomer RUB2, reinforcing fillers CB2 such as non-recovered carbon black and additives ADD2 to prepare tyre rubber, which contains recovered filler material and non-recovered filler material.

A method for manufacturing a pneumatic tyre TYR2 for a vehicle, wherein recovered filler material obtained from the pyrolysis 14 of used tyre rubber TRB11 is used for the preparation of rubber components TRB2, thus differs from the method disclosed above in respect of the composition of the filler materials. Similar method steps, as disclosed above for manufacturing a pneumatic tyre TYR1, are applicable for manufacturing a preform of a pneumatic tyre 21 and curing 22 of a pneumatic tyre, which comprises recovered filler material. The compounding 20 of tyre rubber wherein both non-volatile fraction NVOL1 from the pyrolysis and non-recovered carbon black is used as fillers may be performed stepwise in a reactor or an internal mixer, as already disclosed above, and as explained hereafter in more detail. The additives ADD2, elastomers RUB2 and reinforcing fillers CB2 used for the compounding 20 of tyre rubber composition comprising non-volatile fraction NVOL1 from the pyrolysis 14 can be similar to additives ADD1, elastomers RUB1 and reinforcing fillers CB1 used when preparing a tyre rubber composition comprising lignin-based filler material LIG1. An assembled tyre comprising a metal component, a textile component and one or more rubber components which comprise recovered filler material, which have not yet been cured, is referred to as a green tyre GT2. The pneumatic tyre TYR2 may comprise one or more metal and textile components for reinforcement purposes, which have also been prepared of recycled materials. For example the metal components, such as belts or bead wires, may be made of recycled steel. In addition, the textile components, such as reinforcing textile layers, radial plies or nylon belts, may be of recycled polymeric materials, such as recycled polyethylene terephthalate or recycled polyamide. Increasing of the content of recovered filler material as well as recycled materials in the pneumatic tyre components reduces the use of virgin feedstock materials and increases the sustainability of the product.

Hence, tyre rubber containing recovered filler material that has been obtained from the pyrolysis of tyre rubbers comprising lignin-based filler material LIG1, such as HTC lignin, may be used for manufacturing a new pneumatic tyre TYR2 comprising a metal component MET2, a textile component TXT2 and one or more cured rubber components, wherein at least one rubber component TRB2 contains carbon black CB2 and recovered filler material NVOL1.

When the recovered filler material is non-volatile fraction NVOL1 from pyrolyzed tyre rubber TRB11 comprising lignin-based filler material, the recovered filler material, in general, is distinguished from conventional recovered carbon black materials by specific surface area. While conventional recovered carbon black typically has a specific surface area in the range of 50 to 80 $m^2$/g, the non-volatile fraction NVOL1 from pyrolyzed tyre rubber TRB11 comprising lignin-based filler material has a higher specific surface area $S_{BET}$, such as in the range of 150 to 200 $m^2$/g, the specific surface area referring to the total surface area $S_{BET}$ based on multipoint nitrogen adsorption, determinable according to ASTM D6556-19a of carbon black type filler material.

The invention is hereafter explained further by way of experimental studies.

*Example 1 - Preparation of rubber compounds for a pneumatic tyre*

Rubber compositions suitable for use as rubber components of a pneumatic tyre were prepared according to the general formula presented in Table 1 (below). The compositions comprised both natural rubber and synthetic rubber (polybutadiene rubber) as elastomers. In the prepared rubber compositions, the type of filler was varied between the compositions, while amount of the filler, 40 parts per hundred rubber (phr) remained the same in each rubber composition. Also the other constituents and their amounts in the compositions remained unchanged.

Three different rubber compositions were prepared, each comprising one of the following filler compositions C1-C3:

- C1: N660 grade carbon black (commercial), $S_{BET}$ = 36 $m^2$/g
- C2: Lignin (Kraft), $S_{BET}$ = 2 $m^2$/g
- C3: Lignin treated by hydrothermal carbonization, $S_{BET}$ = 22 $m^2$/g.

This enabled an experimental study, wherein the effect of a particular filler composition could be compared to other filler compositions, upon pyrolyzing cured rubber compositions containing such fillers separately and together. In particular, the effect of lignin-based filler material could be compared to that of carbon black. N660 series carbon black represents a grade which is widely used in rubber components of pneumatic tyres, particularly in non-tread area rubber components of pneumatic tyres.

The lignin filler used in the study was commercially available, oven dry high purity kraft lignin. The lignin treated by hydrothermal carbonization, denoted as HTC lignin, was oven dry material prepared from the kraft lignin.

Table 1. Formula used for preparing rubber compositions for the study.

| Raw material | amount (phr) |
| --- | --- |
| natural rubber (SMR10) | 80 |
| polybutadiene rubber (Buna® CB 25) | 20 |
| filler | 40 |

(continued)

| Raw material | amount (phr) |
|---|---|
| dispersion agent (ZnO) | 3 |
| additive (stearic acid) | 2 |
| additive (TDAE oil) | 6 |
| antidegradant (6PPD) | 2 |
| antidegradant (TMQ.) | 1 |
| | |
| vulcanization agent (CBS) | 1.5 |
| sulphur (99 percent by mass) | 1.5 |
| Total phr | \| 157 |

All rubber compositions in the study were prepared using the same procedure. A 2L-internal mixer (Krupp Elastomertechnik GK 1,5 laboratory mixer) was used for stepwise mixing of the compounds. In a first step, the polymers (natural rubber and polybutadiene rubber) were added and the rubber mixture thus formed was mixed for 40 seconds. In a second step, the chemicals (ZnO, stearic acid, TDAE oil, 6PPD, TQM) and 2/3 of the filler-type material (CB, Kraft lignin, HTC lignin or rCB) were added and the rubber mixture thus formed was mixed for 60 seconds. In the third step, the rest (1/3) of the filler-type material was added and the rubber mixture thus formed was mixed for 45 seconds. The formed rubber composition (A-phase) was thereafter dropped and let cool down for a period of 24 hours in a room temperature (25 $\pm$ 3°C).

In a third step, after the cool down period of 24 hours, the dropped rubber composition (A-phase) and vulcanization chemicals (CBS and sulphur) were added to mixer and the rubber composition thus formed was mixed for 3 minutes, during which time the mixing temperature was increased from room temperature to 99°C. The formed rubber component was thereafter vulcanized at a temperature of 150°C and under a pressure of 150 bar. The optimum vulcanization time of t90 (at 150°C) was determined with a moving die rheometer according to ASTM D5289/1995, the t90 referring to the time at which the torque measured from a sample reaches 90% of its maximum value. A vulcanization time of t90 plus 5 minutes was used for curing the rubber component. The cured rubber component thus prepared was worked into a sheet having a thickness of 2 mm.

*Example 2 - Pyrolysis of rubber compounds for a pneumatic tyre*

Samples S1-S3, corresponding to the compositions C1- C3 disclosed above, as well as sample S4, which contained a 50:50 weight ratio of compositions C1 and C3, were prepared from the cured rubber sheets, and subjected to a pyrolysis process.

Hence, a series of tyre rubber samples S1-S4 were prepared for pyrolysis, wherein

- sample S1 represented tyre rubber comprising 40 phr of N660 grade carbon black as filler material, wherein the filler amount was 25.5 wt.%,
- sample S2 represented tyre rubber comprising 40 phr of Kraft lignin as lignin-based filler material, wherein the filler amount was 25.5 wt.%,
- sample S3 represented tyre rubber comprising 40 phr of HTC lignin as lignin-based filler material, wherein the filler amount was 25.5 wt.%, and
- sample S4 represented tyre rubber comprising 20 phr of HTC lignin as lignin-based filler material and 20 phr of N660 grade carbon black wherein the filler amount was 25.5 wt.%, of which 12.75 wt.% was HTC lignin.

A rubber composition containing 20 phr of lignin treated by hydrothermal carbonization and 20 phr of N660 grade carbon black represents sample obtainable from a pneumatic tyre, which contains multiple tyre rubbers and lignin-based filler material. Thus, the effect of the lignin-based filler material in tyre rubbers upon pyrolysis could be demonstrated, in comparison to comparative rubber compositions, which contained only carbon black, Kraft lignin or HTC lignin.

All samples S1-S4 were pyrolyzed using the same procedure, which resulted into non-volatile fractions from the pyrolyzed tyre rubbers. An amount of 5 grams of each sample was cut into small pieces, the average diameter of each cut piece being equal to or less than 2 mm. The cut pieces were placed into a pyrolysis oven and pyrolyzed in an

inert atmosphere ($N_2$) at a temperature of 600°C, under 1 bar pressure. A pyrolysis time of 90 minutes was used, upon which a volatile and a solid fraction was formed. After the pyrolysis, the solid fraction from the pyrolysis of the tyre rubber sample was cooled down to a room temperature (25 ± 3°C) and washed with an acidic solution. The solid fraction from the pyrolysis was placed into a beaker and 100ml of 1M HCl was added into it. The suspension thus formed was stirred and heated to a boiling point. The procedure was performed to reduce the amount of minerals, such as Zn and S, from the solid fraction. After washing, the demineralized material was filtered and washed with distilled water until the pH of the washing solution was determined to be neutral. The recovered filler material thus formed was dried by placing the sample into an oven and drying the sample in a temperature of 105°C for 16h. The dried sample was cooled down to a room temperature (25 ± 3°C). The recovered filler material samples, denoted as samples P1-P4, thus represent the non-volatile fractions from the pyrolyzed tyre rubber samples S1-S4, respectively, which have been washed and dried.

*Example 3 - Specific surface area and porosity of the recovered filler material*

The specific surface area of each of the recovered filler material samples P1-P4, obtained as disclosed in the examples 1 and 2 above, was determined according to ASTM D6556-19a, the specific surface area referring to the total surface area $S_{BET}$ based on multipoint nitrogen adsorption, denoted as NSA. The NSA is based on the B.E.T theory, which includes the total surface area $S_{BET}$, inclusive of micropores with pore diameters less than 2 nm (20 Å). Specific surface area based on multipoint nitrogen adsorption is widely used for determining the total and external surface area of carbon black and carbon black type material.

The total surface area $S_{BET}$ and t-Plot micropore area of the samples were determined using a Tristar II PLUS automated surface area and porosity analyzer manufactured by Micromeritics®, in accordance with the manufacturer's instructions and conforming to ASTM D6556-19a.

All samples P1-P4 were prepared for the surface area and microporosity analyses using the same procedure. An amount of 0.6 grams of the recovered filler material was weighted with a laboratory scale (0,0001 g precision) into a sample tube and the sample was dried for 30 minutes at a temperature of 300 °C in an inert $N_2$ atmosphere by means of a Vacprep 061 degasser (Micromeritics®) in accordance with the manufacturer's instructions.

The data point measurements from the samples were performed in conformance to ASTM D6556-19a. A relative pressure $P/P_0$ in the range of 0.05 - 0.50 was used for samples that comprised a total surface area $S_{BET}$ equal to or less than 130 $m^2/g$, the relative pressure $P/P_0$ referring to the equilibrium pressure divided by the saturation pressure as defined by ASTM D6556-19a. 10 data points were measured from each sample. For samples that comprised a total surface area $S_{BET}$ higher than 130 $m^2/g$, additional data points were measured at $P/P_0$ in the range of 0.05 - 0.10. The t-Plot micropore area was determined at $P/P_0$ in the range 0.2 - 0.5. The statistical layer thickness t of the material was calculated, according to equation 1 below:

$$\text{Equation 1:} \quad t = 0.088 \times (P/P_0)^2 + 0.654 \times (P/P_0) + 0.298$$

, wherein P represents the manometer pressure (kPa) and $P_0$ the saturation vapor pressure of $N_2$ (kPa).

The results of the specific surface area and porosity analysis are presented in Table 2 below. The values indicated in Table 2 are averaged values of two independent measurements, indicating also the standard deviation of the surface area measurements.

Table 2. Results of the specific surface area and porosity analysis of recovered filler materials from samples P1 to P4, comparing the properties of the recovered filler material after pyrolysis of tyre rubber. All samples were prepared using the same procedure, the variable between the samples being the composition of the filler material prior to pyrolysis. Sample P1, prior to pyrolysis, contained only N660 grade carbon black, denoted as CB, as filler. Sample P2, prior to pyrolysis, contained only Kraft lignin as filler. Sample P3, prior to pyrolysis, contained only HTC lignin as filler. Sample P4, prior to pyrolysis, contained equal amounts of N660 carbon black and HTC lignin as filler.

| Sample | Filler content prior to pyrolysis (wt. %) | $S_{BET}$ ($m^2/g$) | t-Plot micropore area ($cm^2/g$) |
|---|---|---|---|
| P1 | N660 CB (25.5 wt. %) | 45.7 ± 0.5 | 1.8 ± 1.1 |
| P2 | Kraft lignin (25.5 wt. %) | 321.3 ± 3.9 | 207.3 ± 5.9 |
| P3 | HTC lignin (25.5 wt. %) | 363.9 ± 0.3 | 208.1 ± 4.2 |
| P4 | N660 CB (12.75 wt. %), HTC lignin (12.75 wt. % ) | 158.3 ± 3.6 | 68.9 ± 5.0 |

As can be reviewed from Table 2 results, the pyrolysis of tyre rubber comprising carbon black resulted into material (P1) having a total surface area $S_{BET}$ of 45.7 $m^2$/g, which was only 9 $m^2$/g higher than in the raw material (N660) used for preparing the tyre rubber. On the other hand, the total surface area $S_{BET}$ of the recovered filler material obtained from pyrolysis of tyre rubber comprising a lignin-based filler (P2 and P3) was in the range of 320 to 365 $m^2$/g, which was 10-100 times higher than in the raw material (lignin and HTC lignin) used for preparing the tyre rubber. The drastic increase of microporosity is evidenced by the t-plot micropore area, which shows an enormous difference to the recovered filler material obtained from pyrolysis of tyre rubber comprising carbon black. In the recovered filler material obtained from pyrolysis of tyre rubber comprising a lignin-based filler (P2 and P3) the t-plot micropore area is in the range of 200 to 210 $cm^2$/g, whereas in the recovered filler material obtained from pyrolysis of tyre rubber comprising carbon black (P1) the t-plot micropore area is in the range of 2 to 3 $cm^2$/g, indicating approximately a 100 times difference. This result demonstrates that the pyrolysis of a tyre rubber, wherein only lignin-based filler is used, results into a product having a different morphology and specific surface area than what is achieved when pyrolyzing tyre rubber comprising carbon black, without a lignin-based filler.

Unexpectedly, however, the determined specific surface area and microporosity of the recovered filler material obtained from pyrolysis of tyre rubber comprising carbon black and lignin-based filler, HTC lignin in particular (P4), deviated significantly from the other results determined from recovered filler material obtained from pyrolysis of tyre rubber comprising carbon black (P1) or lignin-based filler (P2 and P 3). The total surface area $S_{BET}$ of the recovered filler material obtained from pyrolysis of tyre rubber comprising carbon black and HTC lignin (P4) was 158 $m^2$/g, which was 43% of the total surface area $S_{BET}$ of the recovered filler material obtained from pyrolysis of tyre rubber comprising HTC lignin only (P3), and 3.4 times higher than that of the recovered filler material obtained from pyrolysis of tyre rubber comprising carbon black only (P1). The determined total surface area $S_{BET}$ from the recovered filler material obtained from pyrolysis of tyre rubber comprising carbon black and lignin-based filler (P4) was not the arithmetic mean of the two comparative samples (P1 and P3), either. Moreover, the t-plot micropore area of the recovered filler material obtained from pyrolysis of tyre rubber comprising carbon black and HTC lignin (P4) was 69 $m^2$/g, which was over 38 times higher than that of the recovered filler material obtained from pyrolysis of tyre rubber comprising carbon black only (P1) and only 33% of the t-plot micropore area of the recovered filler material obtained from pyrolysis of tyre rubber comprising HTC lignin only (P3). The results demonstrate that the pyrolysis of tyre rubber comprising lignin-based filler may be used for adjusting the morphology and increasing specific surface area of the resulting non-volatile fraction, such that recovered filler material having a specific surface area $S_{BET}$ which is less than 200 $m^2$/g may be obtained. The study further demonstrates that the pyrolysis of tyre rubber comprising HTC lignin and carbon black is particularly advantageous for adjusting the morphology and increasing specific surface area of the resulting non-volatile fraction, such that recovered filler material having a specific surface area $S_{BET}$ between 150 and 200 $m^2$/g and a high t-plot micropore surface area, such as in the range of 20 to 150 $cm^2$/g, may be obtained.

The results further indicate, that pyrolysis of tyre rubber comprising carbon black and lignin-based filler material, HTC lignin in particular, enables to adjust the structure of the recovered filler material such that the bulk density of the recovered filler material may be reduced, without excessively increasing the total surface area. This enables to produce recovered filler material having less weight, which may be used as carbon black type filler material, when preparing a tyre rubber for a pneumatic tyre.

*Example 4 - thermogravimetric analysis of the recovered filler material*

The behavior of the recovered filler material samples P1-P4 under heating was further studied by means of thermogravimetric analysis, abbreviated as TGA. The analysis was performed according to standard ASTM D6370-99(2019) using Netzsch TG 209 F1 Libra, with Proteus software, according to the manufacturer's instructions.

All samples were subjected to the same conditions. The atmosphere profile in each analysis was $N_2/O_2/N_2/N_2$. The crucible in each analysis was of aluminum oxide ($Al_2O_3$). The thermogravimetric analysis was performed over a temperature range from 20°C to 800°C, at a heating rate of 10°C/minute, according to standard ASTM D6370-99(2019).

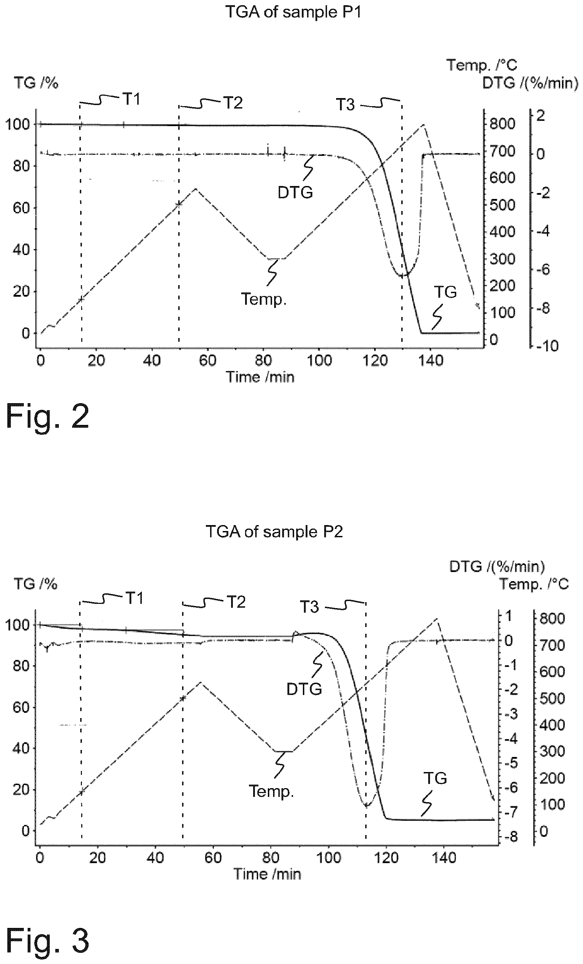

Reference is made to Figures 2 to 5, which show the results of the TGA analyses. The ordinate (vertical axis) on the left side of the diagrams represents the mass change TG in percentages (TG /%). The ordinates (vertical axes) on the right side of the diagram, from left to right, represent the differential mass change DTG in percentages per minute (DTG / (%/min)) and the temperature (Temp./°C) during the experiment. The abscissa (horizontal axis) of each diagram represents the time in minutes.

The timepoints T1, T2, T3, T4 indicated in Figures 2 to 5 by dashed vertical lines represent the observed peaks of the DTG curves. The peaks indicate the points with greatest rate of the mass change in the TGA analyses. A first DTG curve peak was observed in all samples P1-P4 at a timepoint T1 of 14.5 minutes, at a temperature of 150°C, under inert nitrogen atmosphere ($N_2$). This peak corresponds to the moisture content of the sample. A further DTG curve peak was observed in all samples P1-P4 at a timepoint T2 of 49.6 minutes, at a temperature of 500°C, also under inert atmosphere ($N_2$). This peak corresponds to the volatile content of the sample. The atmosphere was switched into synthetic air at a timepoint of 85 minutes at a temperature of 300°C, and thus further DTG curve peaks were observable in samples P1-P4 due to combustion reactions of the recovered filler materials, which occurred later during the analysis in temperatures between 500 and 750°C. By changing the atmosphere from inert to oxidative during the TGA measurement and heating up the sample, the carbon black type filler material is eventually combusted into carbon dioxide. The recovered filler material samples P2 - P4, had unique characteristics in the TGA analysis, each differing from the characteristics of the recovered filler material sample P1, which enabled the comparison and quantification of the samples based on the mass changes upon combustion. The timepoint T3, T4 and the temperature of the further DTG curve peaks varied according to the composition of the sample and reflect the structural differences of the compositions. Hence, the TGA analysis, in particular the DTG curve peaks at timepoints T3 and T4, served as a means to characterize the samples and distinguish them from each other. The mass changes, timepoints T1 to T4 and the residual ash content (wt.%) at the end of the analysis (800°C), after combustion under atmosphere containing oxygen, are shown in Table 3 below.

Table 3. TGA analysis results of recovered filler material samples P1-P4. The TG and DTG curves indicate the determined sample mass loss versus time, which takes place in different temperatures. The first mass change at 150°C indicates the moisture content of the samples, while the second mass change at 500°C indicates the volatile content of the samples, both under $N_2$ atmosphere. Further mass changes were observed due to combustion reactions under oxidative atmosphere, when the temperature was raised further, to 800°C The ash content (wt.%) indicates the residual mass at the end of the analysis, after combustion under $O_2$ atmosphere to 800°C.

| Sample | Filler content prior to pyrolysis (wt. %) | Mass change at 150°C (T1) | Mass change at 500°C (T2) | Further mass changes (T3, T4) | Ash content at 800°C |
|---|---|---|---|---|---|
| P1 | N660 CB (25.5 wt. %) | -0.15 % | -0.19 % | -6.34 %, at 723.7°C | 0.13 wt.% |
| P2 | Kraft lignin (25.5 wt. %) | -1.95 % | -2.11 % | -6.72 %, at 557.7°C | 5.23 wt.% |
| P3 | HTC lignin (25.5 wt. %) | -1.56 % | -1.83 % | -6.24 %, at 539.7°C | 8.69 wt.% |
| P4 | N660 CB (12.75 wt. %), HTC lignin (12.75 wt. %) | -0.99 % | -1.07 % | -4.25 %, at 506.7°C and -5.97 % at 691.7°C | 3.75 wt.% |

Throughout the thermogravimetric analysis, in all determined DTG curve peaks, the mass change of recovered filler material samples P2, P3, P4 from tyre rubbers S2, S3, S4 comprising lignin-based filler material was larger than in the recovered filler material sample P1 from tyre rubber S1 comprising only carbon black. This indicated a higher volatile content that was due to the lignin-based fillers in the samples.

As observable from the figures 2 to 5 when viewed together with Table 3, the DTG curve of sample P1 indicates a peak at a temperature of 723.7°C (in oxidative atmosphere), which is due to combustion of carbon black. The DTG curve of sample P2 indicates a peak at a temperature of 557.7°C (in oxidative atmosphere), which is due to combustion of the lignin based recovered filler that has been formed during the pyrolysis of the tyre rubber sample S2. The DTG curve of sample P3 indicates a corresponding peak at a lower temperature of 539.7°C (in oxidative atmosphere), which is due to combustion of the lignin based recovered filler that has been formed during the pyrolysis of the tyre rubber sample S3 containing HTC lignin.

When comparing the specific surface area $S_{BET}$ of the sample P1 (45.7 $\pm$ 0.5 m²/g) to the specific surface areas $S_{BET}$ of the sample P2 and P3 (321.3 $\pm$ 3.9 m²/g and 363.9 $\pm$ 0.3 m²/g, respectively), it can be observed that the combustion temperature is dependent of the specific surface area of the recovered filler material. In other words, the specific surface area of the material is an indication of the average particle size of the filler material, wherein a larger specific surface area reflects a smaller average particle size and a lower combustion temperature. Table 3 and figures 2 to 5, when viewed together, demonstrate this phenomenon. The combustion of the lignin-based recovered filler material samples P2 and P3 takes place at lower temperatures when compared to the recovered filler material sample P1 containing carbon black. However, a difference is detectable also between recovered filler material samples P2 and P3 containing kraft lignin and HTC lignin, respectively. The TGA results therefore evidence that recovered filler material which is non-volatile fraction from pyrolyzed tyre rubber comprising lignin-based filler material thus has a remarkably higher surface area than recovered filler derived from pyrolyzed tyre rubber comprising only carbon black, without a lignin-based filler material.

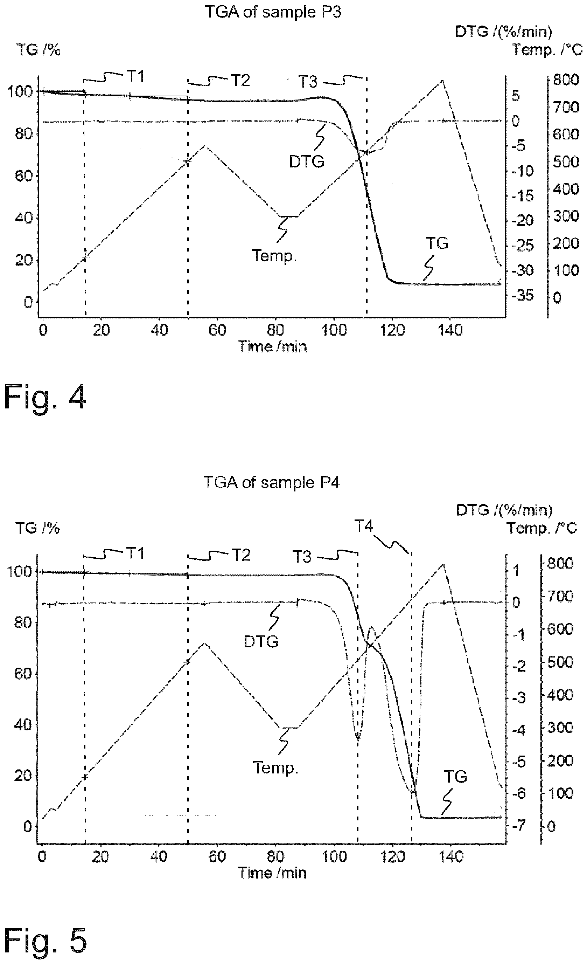

Interestingly, as evidenced by figure 5, the combustion (in oxidative atmosphere) of recovered filler material, which prior to pyrolysis contained equal amounts of N660 carbon black and HTC lignin as filler, produced two peaks for the DTG curve, wherein the first peak was measured at a temperature of 506.7°C and the second peak was measured at a temperature of 691.7°C. The two distinguishable peaks at different temperatures, one measured in oxidative atmosphere at a temperature less than 600°C and the other in oxidative atmosphere at a temperature higher than 600°C, indicate that the recovered filler material has been formed of two kind of filler materials with different specific surface areas. The first peak at a lower temperature is due to the combustion of recovered filler material formed from HTC lignin during pyrolysis. The second peak at a higher temperature is due to the combustion of recovered filler material formed from carbon black during pyrolysis. However, the timepoints T3 and T4 and the temperatures of the further DTG peaks measured in the analysis of the sample P4 differ from the timepoints T3 and temperatures of the DTG measured in the analyses of the samples P1, containing only carbon black as a filler, and P3, containing only HTC lignin as a filler. Thus, the outcome of the analysis of sample P4 could not be predicted based on the results of the previous analyses of samples P1 and P3. The pyrolysis of tyre rubber components that contain lignin-based filler material and carbon black therefore leads to a recovered filler material that is distinguishable and has novel properties.

Hence, as described above, a recovered filler material from a tyre rubber which prior to pyrolysis contains carbon black and HTC lignin as filler, in a temperature range from 500 to 750°C and upon exposure to oxidative atmosphere, produces two consecutive peaks representing differential mass changes of the carbon black and HTC lignin, respectively, which may be determined by means of a thermogravimetric analysis over a temperature range from 20°C to 800°C, at a heating rate of 10°C/minute, according to standard ASTM D6370-99 (2019). In particular, upon exposure to the oxidative atmosphere in a temperature range from 500 to 750°C, a first peak representing differential mass change at a temperature less than 600°C due to the lignin-based material may be observed, and a second peak representing differential mass change at a temperature higher than 600°C due to the carbon black based material may be observed, when determined by means of a thermogravimetric analysis over a temperature range from 20°C to 800°C, at a heating rate of 10°C/minute, according to standard ASTM D6370-99 (2019).

As also indicated by Table 3 and demonstrated by the thermogravimetric curves in Figures 2 to 5, both the volatile fraction at 500°C and the ash content of recovered filler material samples P2, P3 and P4 from tyre rubber samples S2, S3 and S4 comprising lignin-based filler material is much higher than the volatile fraction at 500°C and the ash content of the recovered filler material P1 from tyre rubber sample S1 comprising only carbon black . At the end of the analysis, after combustion, the recovered filler material samples P2, P3 from tyre rubber samples S2, S3 comprising only lignin-based filler material demonstrated a residual ash in the range of 5 to 9 wt.%, whereas the recovered filler material sample P4 from tyre rubber sample S4 comprising carbon black and lignin-based filler contained residual ash only in the range of 3.5 to 4.0 %, when determined according to ASTM D6370-99(2019). While the amount was much higher than in the recovered filler material sample P1 from tyre rubber sample S1 comprising only carbon black, the amount was still significantly less than in the recovered filler material samples P2, P3 from tyre rubber samples S2, S3.

For the person skilled in the art, it will be clear that modifications and variations of the pneumatic tyre and of the method for manufacturing a pneumatic tyre, as disclosed above, are perceivable. Any particular embodiments described above are not meant to limit the scope of the invention, which is defined by the appended claims.

## Claims

1.  A pneumatic tyre comprising a metal component, a textile component and a cured rubber component, wherein the cured rubber component contains

    - carbon black, and
    - recovered filler material

    **characterized in that**

    - the recovered filler material is non-volatile fraction from pyrolyzed tyre rubber comprising lignin-based filler material, the recovered filler material having a specific surface area which is less than 200 m$^2$/g, the specific surface area referring to the total surface area ($S_{BET}$) based on multipoint nitrogen adsorption, determinable according to ASTM D6556-19a of carbon black type filler material.

2.  A method for manufacturing a pneumatic tyre, the method comprising

    - arranging one or more rubber components onto a building drum to form a tubular preform, wherein at least one rubber component contains carbon black and recovered filler material,
    - expanding the tubular preform to form a preform of a pneumatic tyre,
    - arranging a metal component and a textile component onto the preform of a tyre, and
    - curing the preform of a pneumatic tyre, thereby bonding the components together by means of curing and thereby manufacturing a pneumatic tyre comprising a cured rubber component,

**characterized in that**

- the recovered filler material is non-volatile fraction from pyrolyzed tyre rubber comprising lignin-based filler material, the recovered filler material having a specific surface area which is less than 200 m$^2$/g, the specific surface area referring to the total surface area ($S_{BET}$) based on multipoint nitrogen adsorption, determinable according to ASTM D6556-19a of carbon black type filler material.

3. The pneumatic tyre according to claim 1 or the method according to claim 2, wherein the recovered filler material has a specific surface area ($S_{BET}$) between 150 and 200 m$^2$/g based on multipoint nitrogen adsorption, determinable according to ASTM D6556-19a of carbon black type filler material.

4. The pneumatic tyre or the method according to any of the previous claims, wherein the recovered filler material has a t-plot micropore surface area in the range of 20 to 150 cm$^2$/g, determinable from nitrogen sorption isotherms by means multipoint nitrogen adsorption according to ASTM D6556-19a of carbon black type filler material.

5. The pneumatic tyre or the method according to any of the previous claims, wherein the recovered filler material, in a temperature range from 500 to 750°C and upon exposure to oxidative atmosphere, produces two consecutive peaks representing differential mass changes of the carbon black and HTC lignin, respectively, when determined by means of a thermogravimetric analysis over a temperature range from 20°C to 800°C, at a heating rate of 10°C/minute, according to standard ASTM D6370-99 (2019).

6. The pneumatic tyre or the method according to any of the previous claims, wherein the proportion of carbon black to the recovered filler material in the cured rubber component is in the range of 40 to 60 wt.%, preferably in the range of 45 to 55 wt.%, most preferably in the range of 48 to 52 wt.%.

7. The pneumatic tyre or the method according to any of the previous claims, wherein the amount of recovered filler material in the cured rubber component is at least 7 wt.%, preferably at least 15 wt.%, most preferably at least 25 wt.% of the total weight of the cured rubber component of the pneumatic tyre.

8. The pneumatic tyre or the method according to any of the previous claims, wherein the amount of carbon black and the recovered filler material in the cured rubber component, together, is in the range of 15 to 49 wt.% of the total weight of the cured rubber component of the pneumatic tyre.

9. The pneumatic tyre or the method according to any of the previous claims, wherein the recovered filler material is non-volatile fraction from pyrolyzed tyre rubber comprising lignin-based filler material and carbon black.

10. The pneumatic tyre or the method according to any of the previous claims, wherein the carbon black is non-recovered carbon black and has a specific surface area ($S_{BET}$) in the range of 25 to 100 m$^2$/g, preferably in the range of 27 to 70 m$^2$/g, most preferably in the range of 30 to 40 m$^2$/g, the specific surface area referring to the total surface area based on multipoint nitrogen adsorption, determinable according to ASTM D6556-19a of carbon black type filler material.

11. The pneumatic tyre or the method according to any of the previous claims, wherein the non-volatile fraction has been produced at a pyrolysis temperature of 600°C.

12. The pneumatic tyre or the method according to any of the previous claims, wherein the recovered filler material contains residual ash in the range of 3.5 to 4.0 %, when determined according to ASTM D6370-99 (2019).

13. The pneumatic tyre or the method according to any of the previous claims, wherein the recovered filler material is non-volatile fraction from pyrolyzed tyre rubber comprising the lignin-based filler material, which lignin-based filler material is lignin, preferably lignin that has been treated by hydrothermal carbonization.

14. The pneumatic tyre or the method according to any of the previous claims, wherein the cured rubber component is a non-tread area component, such as a side wall or a carcass component.

15. Use of non-volatile fraction from pyrolyzed tyre rubber comprising lignin-based filler material as filler material in a rubber component of a pneumatic tyre.

16. The use of claim 15, the non-volatile fraction from pyrolyzed tyre rubber material having a specific surface area which is less than 200 m$^2$/g, preferably between 150 and 200 m$^2$/g, based on multipoint nitrogen adsorption, determinable according to ASTM D6556-19a of carbon black type filler material.

17. The use of claim 15 or claim 16, wherein the lignin-based filler material is lignin, preferably lignin that has been treated by hydrothermal carbonization.

Fig. 1

TGA of sample P1

Fig. 2

TGA of sample P2

Fig. 3

Fig. 4

Fig. 5

Europäisches
Patentamt

European
Patent Office

Office européen
des brevets

## EUROPEAN SEARCH REPORT

Application Number

EP 23 16 4083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 3 243 877 A1 (NOKIAN RENKAAT OYJ [FI]) 15 November 2017 (2017-11-15) * par. 110, cl 1, 2 * | 1-17 | INV. B60C1/00 C08K3/04 |
| A | US 2023/078770 A1 (SCHWAIGER BERNHARD [DE] ET AL) 16 March 2023 (2023-03-16) * table 2 * | 1-17 | |
| X | US 2019/284375 A1 (LAHTINEN MIKA [FI] ET AL) 19 September 2019 (2019-09-19) * table 4 B3 par 150, 153-155 * | 1-17 | |

TECHNICAL FIELDS
SEARCHED        (IPC)

C08K
B60C

The present search report has been drawn up for all claims

| Place of search | Date of completion of the search | Examiner |
|---|---|---|
| Munich | 9 August 2023 | Ritter, Nicola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 4083

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2023

| Patent document cited in search report | | Publication date | Patent family member(s) | | Publication date |
|---|---|---|---|---|---|
| EP 3243877 | A1 | 15-11-2017 | BR 112018072313 | A2 | 12-02-2019 |
| | | | CA 3023803 | A1 | 16-11-2017 |
| | | | CN 109071950 | A | 21-12-2018 |
| | | | CN 114604039 | A | 10-06-2022 |
| | | | EP 3243877 | A1 | 15-11-2017 |
| | | | EP 3455296 | A1 | 20-03-2019 |
| | | | JP 6704475 | B2 | 03-06-2020 |
| | | | JP 2019521205 | A | 25-07-2019 |
| | | | MY 182163 | A | 18-01-2021 |
| | | | PH 12018502325 | A1 | 25-03-2019 |
| | | | RU 2715537 | C1 | 28-02-2020 |
| | | | US 2018334568 | A1 | 22-11-2018 |
| | | | WO 2017194346 | A1 | 16-11-2017 |
| US 2023078770 | A1 | 16-03-2023 | AU 2021346836 | A1 | 07-07-2022 |
| | | | BR 112022010282 | A2 | 11-04-2023 |
| | | | CA 3168934 | A1 | 31-03-2022 |
| | | | CN 114929797 | A | 19-08-2022 |
| | | | EP 3974470 | A1 | 30-03-2022 |
| | | | FI 3974470 | T3 | 26-07-2023 |
| | | | KR 20220128614 | A | 21-09-2022 |
| | | | LT 3974470 | T | 10-07-2023 |
| | | | US 2023078770 | A1 | 16-03-2023 |
| | | | WO 2022063841 | A1 | 31-03-2022 |
| US 2019284375 | A1 | 19-09-2019 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3243877 A

**Non-patent literature cited in the description**

- **ANDREAS LIMPER.** Mixing of Rubber Compounds. Hanser Publishers, 2012